# EUROPEAN PATENT SPECIFICATION

(11) **EP 1 482 517 B1**
(45) Date of publication and mention of the grant of the patent: **06.05.2009**
(21) Application number: 03101559.7
(22) Date of filing: 28.05.2003
(51) Int. Cl.: G21C 3/62

(54) **Process for producing nuclear fuel pellets of the mox type**
Verfahren zur Herstellung von Kernbrennstoff-Pellets des MOX-Typs
Procédé de production des pastilles de combustible nucléaire de type MOX

(43) Date of publication of application: 01.12.2004
(73) Proprietor: EURATOM, 1049 Brussels (BE)
(72) Inventor: TOURY, Grégoire, 78660 Ablis (FR); SOMERS, Joseph, 76227 Karlsruhe (DE); HAAS, Didier, 76356 Weingarten (DE)
(74) Representative: Beissel, Jean

(56) References cited:
- EP-A- 0 316 623
- EP-A- 0 317 772
- FR-A- 2 815 035
- US-A- 3 826 754
- US-A- 5 171 520
- ANONYMOUS: "Nuclear fuel pellets with high density" RESEARCH DISCLOSURE, KENNETH MASON PUBLICATIONS, HAMPSHIRE, GB, vol. 399, no. 55, July 1997 (1997-07), XP007121905 ISSN: 0374-4353
- PATENT ABSTRACTS OF JAPAN vol. 2003, no. 08, 6 August 2003 (2003-08-06) & JP 2003 107183 A (TOKYO ELECTRIC POWER CO INC:THE), 9 April 2003 (2003-04-09)
- PATENT ABSTRACTS OF JAPAN vol. 013, no. 306 (P-897), 13 July 1989 (1989-07-13) & JP 01 079691 A (KOBE STEEL LTD), 24 March 1989 (1989-03-24)

## Description

### FIELD OF THE INVENTION

The present invention generally relates to a process for producing nuclear fuel pellets of the MOX type.

### BACKGROUND OF THE INVENTION

Mixed plutonium and uranium oxide (MOX) nuclear fuel pellets are widely used in standard commercial nuclear reactors in major European countries employing nuclear energy. It is one of the most common fuel for commercial nuclear power plants, in particular for Light water reactors (LWR), e.g. pressurised water reactors (PWR) and boiling water reactors (BWR).

Industrial fabrication of MOX fuel pellets relies on processes, which all imply preparing a powder mixture of uranium oxide and plutonium oxide, and compacting and sintering the powder mixture at high temperatures under appropriate atmospheres to obtain pellets with suitable characteristics (geometry, density, chemical and isotopic composition).

One of these processes is called MIMAS (stands for Micronized MASter blend - see e.g. "MOX FUEL FABRICATION AND IN-REACTOR PERFORMANCE", by D. Haas, M. Lippens, Proc. of the Internat. Conference on Future Nuclear Systems, GLOBAL 97, p.489 to 494) and typically involves the milling of a U-Pu oxide primary powder blend with a plutonium content of ca. 30%. This primary powder blend is diluted with a plutonium-free uranium oxide powder to give a secondary powder blend with the desired plutonium content (usually 3-12wt.% Pu). The secondary powder blend is then compacted and sintered to obtain the MOX pellets. This process is used to produce the major share of the world-wide commercial MOX fuel production.

The MIMAS process has a number of benefits. Firstly, since it involves two major powder metallurgy steps (for the production of the plutonium rich primary powder blend and for the secondary powder blend), it permits cross blending of the primary plutonium batches with varying plutonium isotopic vectors. Even in the case of large variations in the plutonium vector of the PuO₂ feed stock, a fairly uniform final product in terms of plutonium isotopic distribution, meeting the required specifications, can be obtained. Secondly, the primary blend can be prepared in significant quantities in advance, stored in intermediate time frames, and subsequently used to produce the three to five different plutonium-enrichments, that are required in a delivery batch for LWR fuel assemblies. Furthermore, the fabrication of a plutonium rich primary blend reduces the volume of plutonium-bearing powder that has to be milled. Finally, mixing of the primary blend with a suitable UO₂ powder results in a flowable powder, which facilitates further handling.

It is to be noted that, as a result of the preparation of the secondary blend which involves mixing the primary blend powder with the Pu-free UO₂ powder, the sintered pellets are chemically heterogeneous and are in fact-after sintering-a two phase composite ceramic-ceramic material (or CERCER) consisting of (U,Pu)O₂ particles (10-200 µm in diameter) dispersed in a UO₂ matrix. The grain size of both ceramic phases is typically 5 µm. This heterogeneity in the final pellet unfortunately leads to two major disadvantages in the use of this type of fuel in the nuclear fuel cycle:
- During its irradiation in a nuclear reactor, the power produced is localised in the Pu rich particles. This leads to locally higher temperatures and burnup of the fuel, which in turn induces greater local damage of the material and higher fission gas release. This detrimentally affects the licensing of the fuel (MOX fuel permits are significantly less than for UO₂), usage of the fissile material, and concomitantly the economic returns on the fuel investment.
- Following irradiation, the dissolution of the spent fuel in nitric acid for reprocessing is impeded by plutonium-rich regions, which are less soluble.

In order to produce MOX pellets having a more homogeneous plutonium distribution, EP-A-1 081 716 proposes a modified MIMAS process, which comprises on one hand the conventional preparation of the primary blend, and on the other hand the preparation of a specific UO₂ powder, free of plutonium. This specific UO₂ powder will then be mixed with the primary blend to obtain the secondary blend, which will be compacted and sintered to produce the desired MOX pellets. The preparation of this specific UO₂ powder involves the following sequence of substeps:
a) preparation of an aqueous solution of uranyl nitrate to which between 0.5 and 2 wt.% of organic thickeners are added such that the viscosity of the solution is adjusted to values between 20 and 100 centipoise;
b) dispersion of the solution into droplets;
c) introducing said droplets into a hydroxide bath;
d) washing the resulting beads;
e) drying the beads by azeotropic distillation using an immiscible organic solvent;
f) thermal treatment of the beads in an oxidising atmosphere;
g) thermal treatment in a reducing atmosphere

This process is rather complex, however, and deviates from conventional process and would necessitate installation of new production lines and process control development, which could hinder or delay its implementation at industrial level.

US 3,826,754 describes the use of additives such as aluminosilicate that chemically combine or associate with deleterious fission products in order to getter and immobilize these fission products.

EP 0 317 772 and EP 0 316 623 relate to processes for manufacturing nuclear fuel pellets, wherein aluminosilicate is used as sintering agent to control the grain size.

### OBJECT OF THE INVENTION

The object of the present invention is to provide an improved process for producing MOX nuclear fuel pellets; that leads to pellets having an homogeneous distribution of plutonium throughout the pellet. This object is achieved by a process as claimed in claim 1.

### SUMMARY OF THE INVENTION

A process for producing nuclear fuel pellets of the mixed oxide type in accordance with the present invention comprises the following steps:
- preparing a powder blend comprising uranium and plutonium oxides; and
- compacting and sintering the powder blend for obtaining the nuclear fuel pellets of the mixed oxide type.

It will be appreciated that in the present process the powder blend to be compacted and sintered additionally comprises aluminosilicate. It has been found that aluminosilicate surprisingly acts as a sintering dopant and thus has a diffusion enhancing effect for uranium and plutonium during the sintering of the pellets, so that it leads to a more homogenous distribution of plutonium throughout the pellets. The addition of the aluminosilicate (generally noted Al₂O₃-SiO₂) is of benefit in all MOX production processes involving the preparation of a U-Pu oxide powder blend, followed by compacting and sintering. Furthermore, the aluminosilicate additive also has the advantageous effect that it increases grain growth during sintering.

The addition of aluminosilicate will thus simultaneously enhance the diffusion of uranium and plutonium between the (U, Pu)O₂ phase―typically formed by agglomeration due to milling―and the large UO₂ matrix, as well as increase the grain growth of these phases. The production of large grains (along with the more homogeneous plutonium distribution) minimises fission gas release and fission damage and enables higher burn-up to be obtained in the reactor and a concomitant significant improvement in fuel economy.

Implementation of the present process is very simple, and conventional MOX production facilities can easily be adapted to operate according to the present process, which is also advantageous with regard production costs. For general industrial use, pellets manufactured according to the present method preferably have a plutonium content in the range of 3 to 12 wt.%, which is achieved by mixing adequate quantities of plutonium and uranium oxide powders.

It will be understood that, depending on the production process, the aluminosilicate additive may be introduced at different stages, e.g. during preparation of the powder blend, or in an additional mixing step just prior to compacting. The aluminosilicate should preferably be added in such a way as to be homogeneously mixed with the other components of the powder mixture.

The aluminosilicate is preferably added in an amount of 0.02 to 0.2 wt.%. This range is considered as suitable for industrial use, in particular with regard to the usual specifications of MOX purity and density.

The aluminosilicate is preferably in the form of a fine powder having a mean diameter in the range of 0.1 to 10 µm.

The term aluminosilicate generally designates a compound of Al₂O₃ and SiO₂, with a certain alumina/silicate ratio. The aluminosilicate to be used in the present process preferably has an alumina/silicate ratio of 20 to 60 mol.%. More preferably, the aluminosilicate additive is bentonite, which has an alumina/silicate ratio of 25 mol.%.

It is to be noted that the use of aluminosilicate as sintering dopant is particularly effective in the known MIMAS process as cited above, and thus allows production of MOX pellets with very homogeneous distribution of plutonium throughout the pellet. In such a case, a primary powder blend of uranium and plutonium oxides having a plutonium content in excess of the finally desired value is prepared on the one hand. The primary powder blend is preferably carried out by milling and mixing adequate quantities of uranium oxide and plutonium oxide; the plutonium content may generally be between 25 and 40 wt.%. On the other hand, a plutonium-free uranium oxide powder is prepared. Then, the powder blend is obtained by mixing the primary powder blend with the Pu-free uranium oxide powder in adequate quantities to achieve the desired plutonium content. It remains to be noted that aluminosil icate is preferably added when mixing the primary powder blend with the Pu-free uranium oxide powder. This permits a homogeneous mixing of the aluminosilicate with the powders and avoids additional costs of an ulterior, specific mixing step. However, it is also possible to add the aluminosil icate to the Pu-free uranium oxide powder during its preparation, and aluminosilicate may even be already added to the primary blend. The aluminosilicate enhances the diffusion of uranium and plutonium between the (U,Pu)O₂ phase and UO₂ phase to give a very homogeneous product.

Alternatively, the preparation of the powder blend may be carried out in a single step by milling and mixing uranium oxide and plutonium oxide in adequate quantities to achieve the desired plutonium content. In such a case, the aluminosilicate additive is advantageously added during preparation of the mixed oxide powder blend so as to be homogeneously mixed therewith.

A lubricant can be added to the powder blend prior to compacting, preferably in an amount between 0.1 and 0.5 wt.%, more preferably 0.3 wt.%. Pore forming material may also be added when preparing the powder blend.

Regarding more specifically the compacting step, the powder blend is preferably compacted into pellets by applying a pressure between 200 and 600 MPa.

The subsequent sintering step of the compacted pellets then preferably takes place at a temperature above 1500°C, preferably between 1500 and 1700°C, and in a humidified Ar/H₂ atmosphere, the hydrogen content lying between 1 and 6 % and the ratio between the partial pressures of hydrogen and water vapour being selected between 20 and 60.

According to the present invention a nuclear fuel pellet of the MOX type comprising a sintered system of uranium and plutonium oxides and further comprising aluminosilicate can be obtained. This MOX pellet has a very homogeneous plutonium distribution as well has enhanced grain size, and thus implies less gas release and fission damages. In addition, the reprocessing of the spent MOX pellets is simplified.

### BRIEF DESCRIPTION OF THE DRAWINGS

The present invention will now be described, by way of example, with reference to the accompanying drawings, in which:
FIG.1: is a micrograph of a MOX fuel pellet manufactured according to the conventional MIMAS process without aluminosilicate additive;
FIGS. 2 and 3: are micrographs of fuel pellets produced according to a preferred embodiment of the present process, prepared by addition of 200 ppm and 2000 ppm of bentonite respectively;
FIGS. 4 and 5: are micrographs of fuel pellets produced according to a preferred embodiment of the present process, prepared by addition of 200 ppm and 2000 ppm of mullite respectively.

### DETAILED DESCRIPTION OF A PREFERRED EMBODIMENT

A preferred embodiment of the present process will now be explained in more detail, the process being implemented in agreement with the conventional MIMAS process.

Firstly, UO₂ and PuO₂ feed powders (with specific isotopic compositions) are weighed as required and are mixed together in the conventional way with a Pu/(U+Pu) ratio between 25 and 40% as desired. The UO₂ and PuO₂ feed powders may have an average particle size ranging from about 20 to 80 µm. Such feed powders are usual in the field. The resulting powder mixture is milled for several hours to obtain a finely dispersed intermixture of the UO₂ and PuO₂ precursor powders. This is known as the primary blend, which thus comprises aggregates of the precursor powders, herein referred to as (U, Pu)O₂ particles.

This primary blend (or a batch(es) thereof) is then taken and mixed with plutonium-free UO₂ powder, preferably from depleted uranium, thereby forming a secondary blend. The aluminosilicate additive is preferably added at this stage of preparing the secondary blend. The minimum aluminosilicate quantity is preferably about 0.02 wt.%. Maximum aluminosilicate quantities are preferably about 0.2 wt%, to avoid density decrease of the final product and production of excessive amount of crystalline phase of the aluminosilicate itself. By adding the aluminosilicate when diluting the primary blend with the Pu-free UO₂ powder, i.e. when preparing the secondary blend, aluminosilicate comes into contact with the (U, Pu)O₂ particles (aggregates of the primary blend) and plutonium free U02 particles, which results in a homogeneous distribution of the aluminosilicate.

The Al₂O₃/SiO₂ ratio is preferably selected between 20 and 60 mol%. An aluminosilicate containing more than about 90 mol% of SiO₂ generally produces a sintered product with too small grain size. In contrast, if this ratio is too high (above 60 mol%, i.e. mullite) the melting point of the aluminosilicate becomes too high and tends to reduce the expected interdiffusion process, while increasing the risk of aluminosilicate crystallisation. Bentonite (with a Al₂O₃/SiO₂ ratio of 25 mol%) is the most preferred composition.

It will be noted that although in the present embodiment the aluminosilicate additive is added during mixing of the primary blend with the UO₂ powder to form the secondary blend, it could also be added to the plutonium-free UO₂ powder during its preparation, i.e. before mixing with the primary blend. Moreover, addition of the aluminosilicate can be done in an extra mixing step, following preparation of the secondary blend and thus just prior to compacting, by mixing the secondary blend with the aluminosilicate additive.

Following the addition of the aluminosilicate additive, a lubricant such as Zinc Stearate can be added to assist in the pressing of the powder and the lubrication of the press matrix itself. In addition to the sintering aid, a pore forming material (such as AZB - Azodicarboxamide) can be added to the secondary blend to tailor the density of the final product pellets to that required. These and other lubricants and porogenes conventionally used in MOX fabrication can be used in the present process.

Once mixed, the secondary blend, which includes the uranium and plutonium oxide powders and the aluminosilicate additive, is compacted into pellets using a suitable press typically operated in the 200-600 MPa range. These pellets are then sintered at high temperature, preferably between 1500 and 1700°C, in a humidified Ar/H₂ atmosphere. The hydrogen content preferably lies in the 1-6% range while the water vapour introduction should result in a P_{H2}/P_{H2O} ratio between 20 and 60. The water permits control of the oxygen potential of the gas atmosphere to maintain the oxygen to metal ratio (O/M) of the fuel closed to 2.00. In addition, it brings about enhanced diffusion to form the homogeneous fuel and grain growth to produce large grains for minimising fission gas release and enabling a longer burn-up in the reactor. As a result, a MOX pellet consisting of a sintered system of uranium and plutonium oxides and comprising aluminosilicate is obtained.

The aluminosilicate additive has the ability of forming a liquid phase on the grains of the (U,Pu)O₂ and UO₂ comp onents of the fuel. It is this liquid phase which enhances the diffusion and material transport in the sintering process to give the density required in the specification and a fuel with a near to perfect homogeneity. The present process thus allows to produce MOX pellets having a very homogeneous plutonium distribution through the pellet, and increased grain size.

### Example 1

The primary blend with a Pu content of ca 30 % was achieved by milling of depleted UO₂ and PuO₂ powders in a container with uranium metal balls. No additive (lubricant or porogene) was used. The container was put in rotation on a roller during 6 h. After the milling step, the primary blend was force sieved to break large Pu-rich agglomerates so that no large particles were found in the secondary blend. The primary blend was mixed with depleted UO₂ in a jar placed on a roller for 4 hours; 0.3 wt.% of Zinc Stearate was added to lubricate later the matrix of the press. After the dilution step, the final Pu content was 9.3 wt.%.

In this example, bentonite was used as aluminosilicate dopant. It was added to the secondary blend in the 0.02-0.2 wt% range. The resulting mixture of PuO2, UO₂ and bentonite was sieved at 40 µm. The homogenisation of the additive was achieved by allowing the container roll on a roller for 1h30.

The MOX powder was compacted to cylindrical pellets using a bi-directionnal press. The matrix diameter was 6.8 mm, and the applied pressure around 420 MPa. The pellets were sintered in a furnace under a hydrogen atmosphere humidified with 2000 ppm of water at 1650°C for 6 hours.

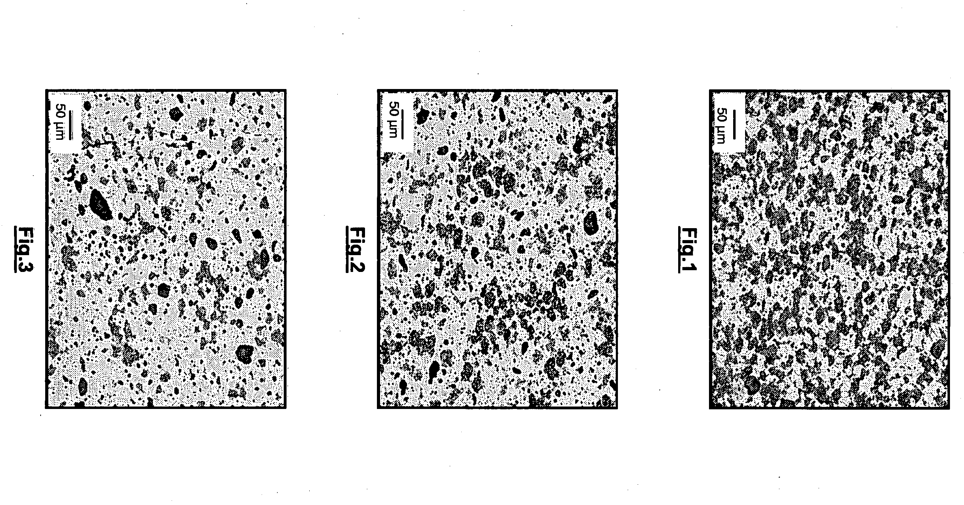

Fig.1 shows the microstructure of a reference MOX fuel pellet produced according to the conventional MIMAS process with no additive. Figs. 2 and 3 are micrographs of MOX fuel pellets prepared by present process with addition of 200 ppm (0.02 wt.%) and 2000 ppm (0.2 wt.%) of bentonite respectively. In the figures, the UO₂ phase has been chemical etched, and appears as dark patches with a fine structure of the UO₂ grains. Pores are apparent as fully dark regions. A decrease in these dark (UO₂) patches is the indicator of homogenisation.

As can be seen, addition of bentonite clearly results in a homogenisation of the uranium and plutonium in the pellet.

Table 1 presents the results of the density and the (U,Pu)O₂ grain size (determined by the Mean Linear intercept - MLI - method) of MOX pellets with different contents of bentonite after sintering. About 500 ppm bentonite appears to be the optimal value to achieve large grains without appreciably causing a decrease in pellet density.

**Table 1: Density and average grain size for MIMAS with addition of bentonite (*: no Zinc Stearate addition).**

| Bentonite content (ppm) | 0 | 200 | 500 | 1000 | 2000 |
|---|---|---|---|---|---|
| Pellet Density | 10.39 | 10.33 | 10.28 | 10.23 | 10.17 |
| (g.cm⁻³) | 10.45* | | 10.40* | | |
| Grain size (U,Pu)O₂ | 8 | 10 | 14 | 14 | 15 |
| phase(µm) | | | | | |

### EXAMPLE 2

In this example, mullite has been used as sintering dopant in the 0.02-0.2 wt.% range. The pellet manufacturing and the sintering conditions were similar to those employed in example 1.

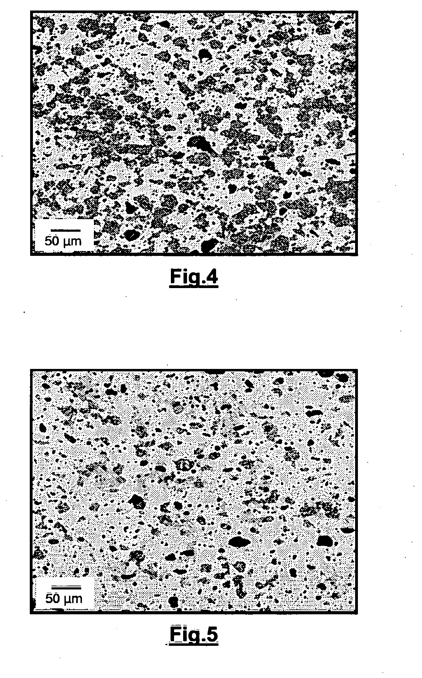

Figures 4 and 5 show micrographs of MOX fuel pellets after UO₂ etching, prepared by the present process with addition of 200 ppm and 2000 ppm of mullite. Homogenisation of the plutonium in the UO₂ dilution phase of the secondary blend is also observed, but the effect is not as pronounced as for bentonite.

Table 2 presents the results of the density and the (U,Pu)O₂ grain size of MOX pellets with different contents of mullite after sintering. The grain size of the (U,Pu)O₂ phase is not as large as is found for bentonite addition.

**Table 2 : Density and average grain size for MIMAS with addition of Mullite.**

| Mullite content (ppm) | 0 | 200 | 500 | 1000 | 2000 |
|---|---|---|---|---|---|
| Pellet Density (g.cm⁻³) | 10.39 | 10.37 | 10.34 | 10.29 | 10.24 |
| Grain size (U,Pu)O₂ phase (µm) | 8 | 9 | 11 | 13 | 14 |

## Claims

1. Use of aluminosilicate as diffusion enhancer in a process for producing nuclear fuel pellets of the mixed oxide type, said process comprising the steps of preparing a powder blend comprising uranium and plutonium oxides as well as aluminosilicate, and compacting and sintering said powder blend.

2. Use according to claim 1, **characterised in that** the aluminosilicate content in said powder blend is of 0.02 to 0.2 wt.%.

3. Use according to claim 1 or 2, **characterised in that** said aluminosilicate has an alumina/silicate ratio of 20 to 60 mol %.

4. Use according to claim 3, **characterised in that** said aluminosilicate has an alumina/silicate ratio of 25 mol.%.

5. Use according to any one of the preceding claims, **characterised in that** said preparation step of said powder blend comprises,
preparing a primary powder blend of uranium and plutonium oxides having a plutonium content in excess of the finally desired value;
preparing a plutonium-free uranium oxide powder;
mixing said primary powder blend with said plutonium-free uranium oxide powder in adequate quantities to achieve the desired plutonium content;
wherein said aluminosilicate is added to said primary powder blend and/or to said plutonium-free uranium oxide power

6. Use according to claim 5, **characterised in that** said preparation of said primary powder blend is carried out by milling and mixing adequate quantities of uranium oxide and plutonium oxide.

7. Use according to claim 5 or 6, **characterised in that** said plutonium content in said primary blend powder is between 25 and 40 wt.%.

8. Use according to any one of claims 1 to 4, **characterised in that** said preparation of said powder blend is carried out by milling and mixing uranium oxide and plutonium oxide in adequate quantities to achieve the desired plutonium content.

9. Use according to any one of the preceding claims, **characterised in that** said powder blend comprises between 3 to 12 wt.% plutonium

10. Use according to any one of the preceding claims, **characterised by** adding a lubricant prior to said compacting step.

11. Use according to claim 10, **characterised in that** said lubricant is added in an amount between 0.1 to 0.5 wt.%, preferably 0.3 wt%.

12. Use according to any one of the preceding claims, **characterised by** adding pore forming material prior to said compacting step.

13. Use according to claim any one of the preceding claims, **characterised in that** compacting of said powder blend into pellets is obtained by applying a pressure between 200 and 600 MPa.

14. Use according to any one of the preceding claims, **characterised in that** sintering of said compacted pellets takes place at a temperature of at least 1500°C, preferably between 1500 and 1700°C, and in a humidified Ar/H₂ atmosphere, the hydrogen content lying between 1 and 6% and the ratio between the partial pressures of hydrogen and water vapour being selected between 20 and 60.

## Patentansprüche

1. Verwendung von Aluminiumsilicat als Diffusionsverstärker in einem Verfahren zur Herstellung von Kernbrennstoffpellets des Mischoxidtyps, wobei das Verfahren die Schritte des Herstellens einer Pulvermischung, die Uran- und Plutoniumoxide sowie Aluminiumsilicat umfasst, und des Verdichtens und Sinterns der Pulvermischung umfasst

2. Verwendung nach Anspruch 1, **dadurch gekennzeichnet, dass** der Aluminiumsilicatgehalt in der Pulvermischung von 0,02 bis 0,2 Gew-% ausmacht

3. Verwendung nach Anspruch 1 oder 2, **dadurch gekennzeichnet, dass** das Aluminiumsilicat ein Aluminiumoxid/Silicat-Verhältnis von 20 bis 60 Mol% aufweist.

4. Verwendung nach Anspruch 3, **dadurch gekennzeichnet, dass** das Aluminiumsilicat ein Aluminiumoxid/Silicat-Verhältnis von 25 Mol-% aufweist.

5. Verwendung nach einem der vorhergehenden Ansprüche, **dadurch gekennzeichnet, dass** der Schritt der Herstellung der Pulvermischung Folgendes umfasst
Herstellen einer primären Pulvermischung aus Uran- und Plutoniumoxiden mit einem Plutoniumgehalt, der höher als der letztlich gewünschte Wert ist;
Herstellen eines plutoniumfreien Uranoxidpulvers;
Mischen der primären Pulvermischung mit dem plutoniumfreien Uranoxidpulver in geeigneten Mengen, um den gewünschten Plutoniumgehalt zu erzielen;
wobei das Aluminiumsilicat zu der primären Pulvermischung und/oder dem plutoniumfreien Uranoxidpulver gegeben wird

6. Verwendung nach Anspruch 5, **dadurch gekennzeichnet, dass** die Herstellung der primären Pulvermischung durchgeführt wird, indem geeignete Uranoxid- und Plutoniumoxidmengen zerkleinert und gemischt werden

7. Verwendung nach Anspruch 5 oder 6, **dadurch gekennzeichnet, dass** der Plutoniumgehalt in der primären Pulvermischung zwischen 25 und 40 Gew.-% ausmacht

8. Verwendung nach einem der Ansprüche 1 bis 4, **dadurch gekennzeichnet, dass** die Herstellung der Pulvermischung durchgeführt wird, indem Uranoxid und Plutoniumoxid in geeigneten Mengen zerkleinert und gemischt werden, um den gewünschten Plutoniumgehalt zu erzielen

9. Verwendung nach einem der vorhergehenden Ansprüche, **dadurch gekennzeichnet, dass** die Pulvermischung zwischen 3 bis 12 Gew.-% Plutonium umfasst.

10. Verwendung nach einem der vorhergehenden Ansprüche, **gekennzeichnet durch** das Zugeben eines Gleitmittels vor dem Verdichtungsschritt.

11. Verwendung nach Anspruch 10, **dadurch gekennzeichnet, dass** das Gleitmittel in einer Menge zwischen 0,1 und 0,5 Gew-%, vorzugsweise 0,3 Gew.-% zugegeben wird

12. Verwendung nach einem der vorhergehenden Ansprüche, **gekennzeichnet durch** das Zugeben eines Porenbildners vor dem Verdichtungsschritt.

13. Verwendung nach einem der vorhergehenden Ansprüche, **dadurch gekennzeichnet, dass** das Verdichten der Pulvermischung zu Pellets erzielt wird, indem ein Druck zwischen 200 und 600 MPa angelegt wird

14. Verwendung nach einem der vorhergehenden Ansprüche, **dadurch gekennzeichnet, dass** das Sintern der verdichteten Pellets bei einer Temperatur von mindestens 1500°C, vorzugsweise zwischen 1500 und 1700 °C und in einer angefeuchteten Ar/H₂-Atmosphäre stattfindet, wobei der Wasserstoffgehalt zwischen 1 und 6 % liegt und das Verhältnis zwischen den Wasserstoff- und Wasserdampfpartialdrücken zwischen 20 und 60 ausgewählt wird

## Revendications

1. Utilisation d'aluminosilicate comme améliorateur de diffusion dans un procédé de production de pastilles de combustible nucléaire du type oxydes mixtes, ledit procédé comprenant les étapes de préparation d'un mélange de poudres comprenant des oxydes d'uranium et de plutonium ainsi que de l'aluminosilicate, et le compactage et le frittage dudit mélange de poudres

2. Utilisation selon la revendication 1, **caractérisée en ce que** la teneur en aluminosilicate dans ledit mélange de poudres est de 0,02 à 0,2 % en poids

3. Utilisation selon la revendication 1 ou 2, **caractérisée en ce que** ledit aluminosilicate a un rapport d'alumine/silicate de 20 à 60 % en mole

4. Utilisation selon la revendication 3, **caractérisée en ce que** ledit aluminosilicate a un rapport d'alumine/silicate de 25 % en mole

5. Utilisation selon l'une quelconque des revendications précédentes, **caractérisée en ce que** ladite étape de préparation dudit mélange de poudres comprend:
la préparation d'un mélange primaire de poudres d'oxydes d'uranium et de plutonium ayant une teneur en plutonium en excès de la valeur finale souhaitée ;
la préparation d'une poudre d'oxyde d'uranium sans plutonium ;
le malaxage dudit mélange primaire de poudres avec ladite poudre d'oxyde d'uranium sans plutonium en quantités adéquates pour atteindre la teneur souhaitée en plutonium ;
dans laquelle ledit aluminosilicate est ajouté audit mélange primaire de poudres et/ou à ladite poudre d'oxyde d'uranium sans plutonium.

6. Utilisation selon la revendication 5, **caractérisée en ce que** ladite préparation dudit mélange primaire de poudres est conduite par le broyage et le malaxage de quantités adéquates d'oxyde d'uranium et d'oxyde de plutonium

7. Utilisation selon la revendication 5 ou 6, **caractérisée en ce que** ladite teneur en plutonium dans ladite poudre de mélange primaire est comprise entre 25 à 40 % en poids

8. Utilisation selon l'une quelconque des revendications 1 à 4, **caractérisée en ce que** ladite préparation dudit mélange de poudres est conduite par le broyage et le malaxage d'oxyde d'uranium et d'oxyde de plutonium en des quantités adéquates pour atteindre la teneur souhaitée en plutonium

9. Utilisation selon l'une quelconque des revendications précédentes, **caractérisée en ce que** ledit mélange de poudres comprend entre 3 à 12 % en poids de plutonium

10. Utilisation selon l'une quelconque des revendications précédentes, **caractérisée par** l'addition d'un lubrifiant avant ladite étape de compactage

11. Utilisation selon la revendication 10, **caractérisée en ce que** ledit lubrifiant est ajouté en une quantité comprise entre 0,1 à 0,5 % en poids, de préférence 0,3 % en poids

12. Utilisation selon l'une quelconque des revendications précédentes, **caractérisée par** l'addition d'un matériau de formation de pores avant ladite étape de compactage

13. Utilisation selon l'une quelconque des revendications précédentes, **caractérisée en ce que** ledit compactage dudit mélange de poudres en pastilles est obtenu par l'application d'une pression comprise entre 200 et 600 MPa

14. Utilisation selon l'une quelconque des revendications précédentes, **caractérisée en ce que** le frittage desdites pastilles compactées a lieu à une température d'au moins 1 500°C, de préférence comprise entre 1 500 et 1 700°C, et dans une atmosphère humidifiée d'Ar/H₂, la teneur en hydrogène s'étendant entre 1 et 6 % et le rapport entre les pressions partielles de l'hydrogène et de la vapeur d'eau étant choisi entre 20 et 60.
